# EUROPÄISCHE PATENTANMELDUNG

(11) **EP 3 819 804 A1**
(43) Veröffentlichungstag der Anmeldung: **12.05.2021**
(21) Anmeldenummer: 19208077.8
(22) Anmeldetag: 08.11.2019
(51) Int. Cl.: G06F 21/64

(54) **INTEGRITÄTSÜBERPRÜFUNG EINES REGISTERINHALTS**

(71) Anmelder: Siemens Aktiengesellschaft, 80333 München (DE)
(72) Erfinder: De Santis, Fabrizio, 80634 München (DE); Dichtl, Markus, 89231 Neu-Ulm (DE); Schneider, Daniel, 80796 München (DE); Sel, Tolga, 81379 München (DE); Zeschg, Thomas, 81543 München (DE)

(57) **Zusammenfassung**

Ein elektronischer Schaltkreis (1) mit einem FPGA (2) und einem Prozessorsystem (3) zur Laufzeitintegritätsüberwachung eines Registerinhalts enthält eine Überwachungseinheit (6) des FPGA (2), die mit dem Prozessorsystem (3) verbunden und dazu eingerichtet ist, einen Kontrollwert zu bestimmen, der von einem in einem Register (4) des Prozessorsystems (3) gespeicherten Registerwert abhängt. Die Überwachungseinheit (6) ist dazu eingerichtet, den Kontrollwert mit einem Referenzprüfwert zu überprüfen und abhängig von einem Ergebnis der Überprüfung ein Ausgabesignal (7) zu erzeugen.

## Beschreibung

Die vorliegende Erfindung betrifft einen elektronischen Schaltkreis mit einer feldprogrammierbaren Logikgatter-Anordnung und einem Prozessorsystem, das ein Register enthält, sowie ein Verfahren zur Integritätsüberprüfung eines Registerinhalts eines elektronischen Schaltkreises und ein Datenverarbeitungsprogrammprodukt.

Eine feldprogrammierbare Logikgatter-Anordnung (englisch: "Field Programmable Gate-Array"), FPGA, auch als feldprogrammierbares Gate Array-bezeichnet, erlaubt eine schnelle Signalverarbeitung und die flexible Änderung der mit dem FPGA realisierten Schaltung. Ein FPGA enthält eine Vielzahl von Logikgattern, deren Funktionalität zum Beispiel über Umsetzungstabellen (englisch: "Lookup Tables") definiert ist.

Ein-Chip-Systeme (englisch: "System-on-a-Chip"), SoC, mit einem FPGA und einem Prozessorsystem können auch als FPGA-SoC-Systeme bezeichnet werden. Diese können die Vorteile des Prozessorsystems, beispielsweise eines Hard-Prozessor-Systems, HPS, und des FPGA auf einem einzigen Chip vereinen. Solche Systeme sind unter anderem für Industrieanwendungen im Einsatz, beispielsweise für Steuerungen. Aus Sicherheitsgesichtspunkten, sowohl bezüglich "Safety"- Gesichtspunkten als auch bezüglich "Security"-Gesichtspunkten, ist es erstrebenswert, eine Manipulation des Prozessorsystems verhindern beziehungsweise wenigstens erkennen zu können.

Es existieren Mechanismen, beim Laden von Software deren Integrität mithilfe von kryptographischen Signaturen oder einer Hashfunktion zu überprüfen. Wird bei einem FPGA-SoC das Prozessorsystem überprüft, kann beispielsweise von sicherem Starten (englisch: "Secure Boot") gesprochen werden. Diese Mechanismen können die Überprüfung jedoch nur beim Startvorgang des Systems und nicht zu dessen Laufzeit realisieren.

Besonders relevant ist in diesem Kontext die Integrität von Registerinhalten einzelner Funktionsblöcke des Prozessorsystems, beispielsweise von Prozessoren des Prozessorsystems, da sich diese unmittelbar auf die aktuell ausgeführten Prozesse auswirken.

Vor diesem Hintergrund ist es eine Aufgabe der vorliegenden Erfindung, ein verbessertes Konzept zur Integritätsüberprüfung eines Registerinhalts eines elektronischen Schaltkreises, der eine feldprogrammierbare Logikgatter-Anordnung und ein Prozessorsystem enthält, anzugeben, durch welches eine Manipulation der Registerinhalte zur Laufzeit des Schaltkreises erkannt werden kann.

Erfindungsgemäß wird diese Aufgabe gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, in dem FPGA des Schaltkreises eine Überwachungseinheit vorzusehen, die einen Registerwert des Prozessorsystems oder einen davon abhängigen Wert auslesen oder empfangen kann, und diesen mit einem Referenzprüfwert überprüfen kann, um die Integrität des Registerwertes zu überprüfen.

Gemäß dem verbesserten Konzept wird ein elektronischer Schaltkreis mit einer feldprogrammierbaren Logikgatter-Anordnung und einem Prozessorsystem angegeben, wobei das Prozessorsystem ein Register enthält. Die Logikgatter-Anordnung weist eine Überwachungseinheit auf, die mit dem Prozessorsystem verbunden ist und die dazu eingerichtet ist, einen Kontrollwert zu bestimmen, der von einem in dem Register gespeicherten Registerwert abhängt. Die Überwachungseinheit ist dazu eingerichtet, den Kontrollwert mit einem Referenzprüfwert zu überprüfen und abhängig von einem Ergebnis der Überprüfung ein Ausgabesignal zu erzeugen.

Die feldprogrammierbare Logikgatter-Anordnung kann auch als feldprogrammierbares Gate-Array, FPGA, bezeichnet werden.

Das Überprüfen des Kontrollwerts mit dem Referenzprüfwert kann ein Vergleichen des Kontrollwerts mit dem Referenzprüfwert beinhalten.

Das Überprüfen des Kontrollwerts mit dem Referenzprüfwert kann das einmalige oder mehrmalige Anwenden einer vorgegebenen kryptographischen Funktion jeweils auf den Kontrollwert und den Referenzprüfwert beinhalten. Das Überprüfen beinhaltet insbesondere einen Vergleich eines Funktionswertes des Kontrollwerts mit einem Funktionswert des Referenzprüfwerts.

Das Prozessorsystem enthält beispielsweise mehrere Komponenten oder Funktionsblöcke, die einen oder mehrere Prozessoren, insbesondere Hard-Prozessoren, Soft-Prozessoren, Co-Prozessoren, Speichereinheiten, Peripherieblöcke, Schnittstellen und so weiter beinhalten können.

Insbesondere ist das Prozessorsystem als Hard-Prozessor-System, HPS, ausgestaltet.

Das Prozessorsystem kann insbesondere ein Betriebssystem ausführen.

Das FPGA kann beispielsweise eine Vielzahl von Logikgattern und Leitungen mit variabel konfigurierbarer Logikfunktionalität beinhalten. Das FPGA erlaubt die Beschleunigung rechenintensiver Operationen und kann dadurch das Prozessorsystem entlasten, indem beispielsweise rechenintensive Aufgaben auf das FPGA ausgelagert werden. Das FPGA übernimmt dabei beispielsweise Krypto-Primitiven wie Verschlüsselungs- und Entschlüsselungsverfahren, Zufallszahlenerzeugung oder Aufgaben physikalisch unklonbarer Funktionseinheiten (englisch: "Physical Unclonable Functions"), PUF, beispielsweise um sicherheitsrelevante Operationen durchzuführen.

Der elektronische Schaltkreis ist insbesondere ein integrierter Schaltkreis.

Insbesondere ist der elektronische Schaltkreis als Ein-Chip-System, SoC, ausgeführt, welches das FPGA und das Prozessorsystem enthält.

Bei dem Register handelt es sich insbesondere um einen Speicherbereich des Prozessorsystems, insbesondere eines Funktionsblocks des Prozessorsystems, wie beispielsweise eines Prozessors oder eines sonstigen IP Cores.

Bei dem Kontrollwert kann es sich beispielsweise um den Registerwert selbst oder einen von dem Registerwert abgeleiteten Wert handeln.

Das Bestimmen des Kontrollwerts beinhaltet beispielsweise das Auslesen des Kontrollwerts, insbesondere des Registerwerts, oder das Erhalten des Kontrollwerts von dem Prozessorsystem, beispielsweise als Ausgabe einer Komponente oder eines Funktionsblocks des Prozessorsystems.

Der Referenzprüfwert kann beispielsweise auf dem FPGA, dem Prozessorsystem, insbesondere dem Register oder einem weiteren Register, oder extern zu dem elektronischen Schaltkreis gespeichert sein.

Der Referenzprüfwert kann beispielsweise ein Sollwert für den Kontrollwert oder ein davon abgeleiteter Wert sein.

Durch einen elektronischen Schaltkreis nach dem verbesserten Konzept kann die Überprüfung des Registerwerts zur Laufzeit des Schaltkreises, insbesondere des Prozessorsystems, realisiert werden. Dazu werden insbesondere Manipulationen sicherheitsrelevanter Registerinhalte des Prozessorsystems von dem FPGA erkannt.

Insbesondere kann dadurch eine Laufzeitintegritätsüberwachung von sicherheitskritischen Registerinhalten durch das FPGA unabhängig vom Zustand des Prozessorsystems erfolgen. Wird eine Manipulation des Registerwertes erkannt, kann dieses Ergebnis von dem FPGA verarbeitet werden, beispielsweise indem der Zugriff auf das FPGA gesperrt wird und/oder sensible Daten von dem FPGA gelöscht werden.

Die Laufzeit des Schaltkreises beziehungsweise des Prozessorsystems entspricht insbesondere einem Zeitraum, nachdem der Lade- oder Startvorgang des Prozessorsystems vollständig abgeschlossen ist.

Durch die Unabhängigkeit der Überwachungseinheit von der überwachten Einheit, also dem Prozessorsystem beziehungsweise dem Funktionsblock, welcher das Register aufweist, kann ein hohes Maß an Sicherheit zur Laufzeit gewährleistet werden.

Gemäß zumindest einer Ausführungsform des elektronischen Schaltkreises nach dem verbesserten Konzept sind das FPGA und das Prozessorsystem, insbesondere die Überwachungseinheit und das Prozessorsystem, insbesondere die Überwachungseinheit und das Register, über ein Bussystem, beispielsweise ein Parallelbussystem, miteinander verbunden.

Gemäß zumindest einer Ausführungsform ist die Überwachungseinheit dazu eingerichtet, den Kontrollwert zur Laufzeit des elektronischen Schaltkreises zu bestimmen und die Überprüfung des Kontrollwerts mit dem Referenzprüfwert zur Laufzeit durchzuführen.

Gemäß zumindest einer Ausführungsform handelt es sich bei dem Register um ein frei verwendbares Register (englisch: "General Purpose Register", GPR).

Gemäß zumindest einer Ausführungsform handelt es sich bei dem Register um ein Spezialregister (englisch: "Special Purpose Register", SPR).

Das Spezialregister kann beispielsweise als Sicherheitsregister, als Virtualisierungsregister, als Sicherer-Start-Register, als Speicherschutzregister oder als Schattenregister ausgestaltet sein.

Gemäß zumindest einer Ausführungsform ist die Logikgatter-Anordnung, beispielsweise eine Steuereinheit der Logikgatter-Anordnung, dazu eingerichtet, abhängig von dem Ausgabesignal ein Warnsignal zu erzeugen und an einer Schnittstelle zur externen Kommunikation des Schaltkreises bereitzustellen, abhängig von dem Ausgabesignal einen Zugriff auf das FPGA zu sperren und/oder vorgegebene Daten, die auf dem FPGA gespeichert sind zu löschen.

Gemäß zumindest einer Ausführungsform ist die Überwachungseinheit dazu eingerichtet, den Registerwert auszulesen, um den Kontrollwert zu bestimmen.

Insbesondere ist die Überwachungseinheit dazu eingerichtet, das Register auszulesen, um den Registerwert auszulesen. Mit anderen Worten ist der Kontrollwert in solchen Ausführungsformen gleich dem Registerwert.

Diese Ausführungsformen sind besonders einfach zu implementieren, es müssen beispielsweise keine kryptographischen Funktionen vorgehalten werden, um den Registerwert in den Kontrollwert zu überführen, was beispielsweise mit einem geringen Speicherbedarf und einer hohen Geschwindigkeit der Überwachung einhergehen kann.

Gemäß zumindest einer Ausführungsform entspricht der Referenzprüfwert einem Sollwert für den Kontrollwert oder einem Sollwert für den Registerwert.

Gemäß zumindest einer Ausführungsform ist die Überwachungseinheit dazu eingerichtet, eine Authentifizierungsinformation zu erzeugen und diese dem Prozessorsystem, insbesondere einer Kontrollwertkomponente des Prozessorsystems, bereitzustellen. Die Kontrollwertkomponente des Prozessorsystems ist dazu eingerichtet, abhängig von der Authentifizierungsinformation und dem Registerwert eine Authentifizierungsantwort zu erzeugen und der Überwachungseinheit bereitzustellen. Die Überwachungseinheit ist dazu eingerichtet, basierend auf der Authentifizierungsantwort den Kontrollwert zu bestimmen.

Dadurch ist mit Vorteil keine direkte Übertragung des Kontrollwerts beziehungsweise des Registerwerts and das FPGA notwendig, was die Sicherheit der Überwachung beziehungsweise der Integritätsüberprüfung selbst erhöhen kann.

Mit anderen Worten können die Überwachungseinheit und die Kontrollwertkomponente ein Aufforderung-Antwort-Verfahren zur Authentifizierung (englisch: "Challenge Response Authentication") implementieren, um den Kontrollwert auf Seiten der Überwachungseinheit zu erzeugen. Dadurch wird die Überwachung sicherer.

Die Aufforderung oder Aufgabe, also die Challenge, entspricht dabei der Authentifizierungsinformation, welche die Überwachungseinheit erzeugt und die Authentifizierungsantwort entspricht der Antwort nach dem Aufforderungsantwortverfahren, also der Response.

Gemäß zumindest einer Ausführungsform ist die Überwachungseinheit dazu eingerichtet, den Referenzprüfwert anhand einer kryptographischen Funktion basierend auf einem Sollwert für den Kontrollwert oder basierend auf einem Sollwert für den Registerwert zu berechnen.

Der Sollwert für den Kontrollwert oder den Registerwert dient dabei als Argument für die kryptographische Funktion und der Referenzprüfwert entspricht dem Funktionswert der kryptographischen Funktion.

Dadurch kann zum einen die Sicherheit weiter erhöht werden, zum anderen können auch mehrere Registerwerte desselben oder unterschiedlicher Register beziehungsweise deren jeweilige Kontrollwerte in einen gemeinsamen Referenzprüfwert überführt werden, was den Speicherbedarf reduziert.

Die kryptographische Funktion kann beispielsweise eine schlüssellose oder eine schlüsselbehaftete kryptographische Funktion sein. Beispielsweise kann die kryptographische Funktion eine kryptographische Hashfunktion sein.

Gemäß zumindest einer Ausführungsform ist die Überwachungseinheit dazu eingerichtet, einen vorab, also insbesondere vor einer Laufzeit des Schaltkreises oder des FPGA, anhand der kryptographischen Funktion basierend auf dem Sollwert für den Kontrollwert oder basierend auf dem Sollwert für den Registerwert berechneten Referenzprüfwert zu verwenden, um mit diesem den Kontrollwert zu überprüfen.

Mit anderen Worten wird der Referenzprüfwert also unter Verwendung der kryptographischen Funktion offline berechnet.

Gemäß zumindest einer Ausführungsform ist der Referenzprüfwert oder der Sollwert für den Kontrollwert oder der Sollwert für den Registerwert in einem Speicherelement der Logikgatter-Anordnung gespeichert.

Beispielsweise kann der Sollwert für den Registerwert in dem Speicherelement gespeichert sein und die kryptographische Funktion kann auf den gespeicherten Sollwert zurückgreifen.

In solchen Ausführungsformen ist insbesondere keine Übertragung des Referenzprüfwerts beziehungsweise des Sollwerts zwischen dem FPGA und dem Prozessorsystem erforderlich. Die Überwachung ist damit besonders einfach und schnell durchführbar.

Gemäß zumindest einer Ausführungsform ist der Referenzprüfwert oder der Sollwert für den Kontrollwert oder der Sollwert für den Registerwert in einem externen Speicherelement gespeichert.

Das externe Speicherelement ist dabei insbesondere extern zu der Logikgatter-Anordnung und/oder dem Prozessorsystem angeordnet.

Gemäß zumindest einer Ausführungsform handelt es sich bei dem Registerwert um einen Festwert, also um einen während der Laufzeit des Schaltkreises nicht veränderlichen Wert.

Entsprechend handelt es sich in solchen Ausführungsformen auch bei dem Referenzprüfwert beispielsweise um einen Festwert.

Gemäß zumindest einer Ausführungsform ist der Referenzprüfwert oder der Sollwert für den Kontrollwert oder der Sollwert für den Registerwert in dem Register oder in einem weiteren Register des Prozessorsystems gespeichert.

Beispielsweise kann der Referenzprüfwert oder der jeweilige Sollwert an den Registerwert angehängt sein.

Der Referenzprüfwert wird in solchen Ausführungsformen beispielsweise basierend auf der kryptographischen Funktion berechnet oder der Referenzprüfwert entspricht einer digitalen Signatur, insbesondere des Registereintrags.

In solchen Ausführungsformen hat die Überwachungseinheit Zugriff auf einen entsprechenden Schlüssel, also auf einen entsprechenden geheimen Schlüssel im Falle einer schlüsselbasierten kryptographischen Funktion beziehungsweise auf einen öffentlichen Schlüssel im Falle einer Signatur. Die Überwachungseinheit kann den verschlüsselten Referenzprüfwert mittels des Schlüssels entschlüsseln.

Dadurch können in solchen Ausführungsformen auch variable Registerwerte, also solche, die während der Laufzeit veränderlich sind, überwacht beziehungsweise überprüft werden.

Gemäß zumindest einer Ausführungsform ist der Registerwert während der Laufzeit variabel. Bei einer Veränderung des Registerwerts während der Laufzeit wird auch der Referenzprüfwert verändert.

Gemäß zumindest einer Ausführungsform enthält das Prozessorsystem einen Funktionsblock, der das Register enthält.

Gemäß zumindest einer Ausführungsform ist der Funktionsblock als IP-Core, als Soft-Core oder als Hard-Core ausgestaltet.

Gemäß zumindest einer Ausführungsform enthält das Prozessorsystem einen Funktionsblock, der das Register enthält. Der Funktionsblock ist als Prozessor, als Speicherelement des Prozessorsystems, als Peripherieblock, als Co-Prozessor, als Schnittstelle, als Speicherverwaltungsblock oder als Speicherschutzblock ausgestaltet.

Der Prozessor kann insbesondere als Zentralprozessor, als Hard-Prozessor oder als Co-Prozessor ausgestaltet sein.

Das Speicherelement des Prozessorsystems kann insbesondere als RAM oder als ROM-Speicher ausgestaltet sein.

Die Schnittstelle kann insbesondere eine Universal Asynchronous Receiver Transmitter, UART, Schnittstelle, eine Universal Serial Bus, USB, Schnittstelle oder eine Ethernet Schnittstelle beinhalten.

Gemäß zumindest einer Ausführungsform ist die Überwachungseinheit als fest verbaute Komponente der Logikgatter-Anordnung ausgestaltet.

Mit anderen Worten ist die Überwachungseinheit in der Hardware des FPGA fest verbaut, insbesondere nicht in einem konfigurierbaren oder feldprogrammierbaren Teil des FPGA.

Gemäß zumindest einer Ausführungsform ist die Überwachungseinheit als konfigurierbare Komponente, insbesondere als feldprogrammierbare Komponente, der Logikgatter-Anordnung ausgestaltet, insbesondere instanziiert.

Gemäß zumindest einer Ausführungsform ist die Überwachungseinheit als Softwaremodul implementiert, insbesondere als Software auf einem Soft-Prozessor des FPGA.

Gemäß zumindest einer Ausführungsform ist die Überwachungseinheit dazu eingerichtet, einen weiteren Kontrollwert zu bestimmen, der von einem in einem weiteren Register des Prozessorsystems gespeicherten weiteren Registerwert abhängt. Die Überwachungseinheit ist dazu eingerichtet, den ausgelesenen weiteren Kontrollwert mit einem weiteren Referenzprüfwert zu überprüfen und das Ausgabesignal oder ein weiteres Ausgabesignal abhängig von einem Ergebnis der Überprüfung des weiteren Kontrollwerts mit dem weiteren Referenzprüfwert zu erzeugen.

Gemäß zumindest einer Ausführungsform enthält das Prozessorsystem ein weiteres Register. Der Kontrollwert hängt von einem in dem weiteren Register gespeicherten weiteren Registerwert ab.

Der Kontrollwert ist also ein gemeinsamer Kontrollwert für den Registerwert und den weiteren Registerwert, sodass ein geringerer Speicherbedarf resultiert.

Gemäß zumindest einer Ausführungsform wird die Authentifizierungsantwort von der Kontrollwertkomponente abhängig von dem Registerwert und dem weiteren Registerwert erzeugt.

Gemäß zumindest einer Ausführungsform ist die Überwachungseinheit dazu eingerichtet, den Referenzprüfwert anhand der kryptographischen Funktion basierend auf dem Sollwert für den Registerwert und basierend auf einem Sollwert für den weiteren Registerwert zu berechnen.

Dadurch kann also ein gemeinsamer Referenzprüfwert für beide Registerwerte, also für den Registerwert und den weiteren Registerwert, verwendet werden, was ebenfalls zu einem geringeren Speicherbedarf führt.

Gemäß dem verbesserten Konzept wird ein Verfahren zur Integritätsüberprüfung eines Registerinhalts eines elektronischen Schaltkreises angegeben. Der elektronische Schaltkreis weist eine feldprogrammierbare Logikgatter-Anordnung und ein Prozessorsystem auf. Gemäß dem Verfahren wird mittels der Logikgatter-Anordnung, insbesondere einer Überwachungseinheit der Logikgatter-Anordnung, ein Kontrollwert bestimmt, der von einem in einem Register des Prozessorsystems gespeicherten Registerwert abhängt. Der Kontrollwert wird mittels der Logikgatter-Anordnung, insbesondere mittels der Überwachungseinheit, mit einem Referenzprüfwert überprüft und abhängig von einem Ergebnis der Überprüfung wird mittels der Logikgatter-Anordnung, insbesondere mittels der Überwachungseinheit, ein Ausgabesignal erzeugt.

Gemäß zumindest einer Ausführungsform des Verfahrens nach dem verbesserten Konzept wird der Kontrollwert zu einer Laufzeit des Schaltkreises insbesondere des Prozessorsystems bestimmt.

Gemäß zumindest einer Ausführungsform erfolgen die Überprüfung des Kontrollwerts mit dem Referenzprüfwert und/oder das Erzeugen des Ausgabesignals zur Laufzeit.

Weitere Ausgestaltungsformen des Verfahrens nach dem verbesserten Konzept folgen direkt aus den unterschiedlichen Ausführungsformen des elektronischen Schaltkreises nach dem verbesserten Konzept und umgekehrt. Insbesondere kann ein elektronischer Schaltkreis nach dem verbesserten Konzept dazu eingerichtet sein, ein Verfahren nach dem verbesserten Konzept auszuführen oder der Schaltkreis führt ein solches Verfahren durch.

Gemäß dem verbesserten Konzept wird ein Datenverarbeitungsprogramm mit Befehlen angegeben. Bei Ausführung des Datenverarbeitungsprogramms durch einen elektronischen Schaltkreis nach dem verbesserten Konzept veranlassten die Befehle den elektronischen Schaltkreis dazu, ein Verfahren nach dem verbesserten Konzept durchzuführen.

Gemäß dem verbesserten Konzept wird ein computerlesbares Speichermedium angegeben, auf dem ein Datenverarbeitungsprogramm nach dem verbesserten Konzept gespeichert ist.

Sowohl das Datenverarbeitungsprogramm als auch das computerlesbare Speichermedium kann als Datenverarbeitungsprogrammprodukt bezeichnet werden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- FIG 1: ein Blockdiagramm einer beispielhaften Ausführungsform eines elektronischen Schaltkreises nach dem verbesserten Konzept;
- FIG 2: ein Blockdiagramm einer weiteren beispielhaften Ausführungsform eines elektronischen Schaltkreises nach dem verbesserten Konzept; und
- FIG 3: ein Ablaufdiagramm einer beispielhaften Ausführungsform eines Verfahrens nach dem verbesserten Konzept.

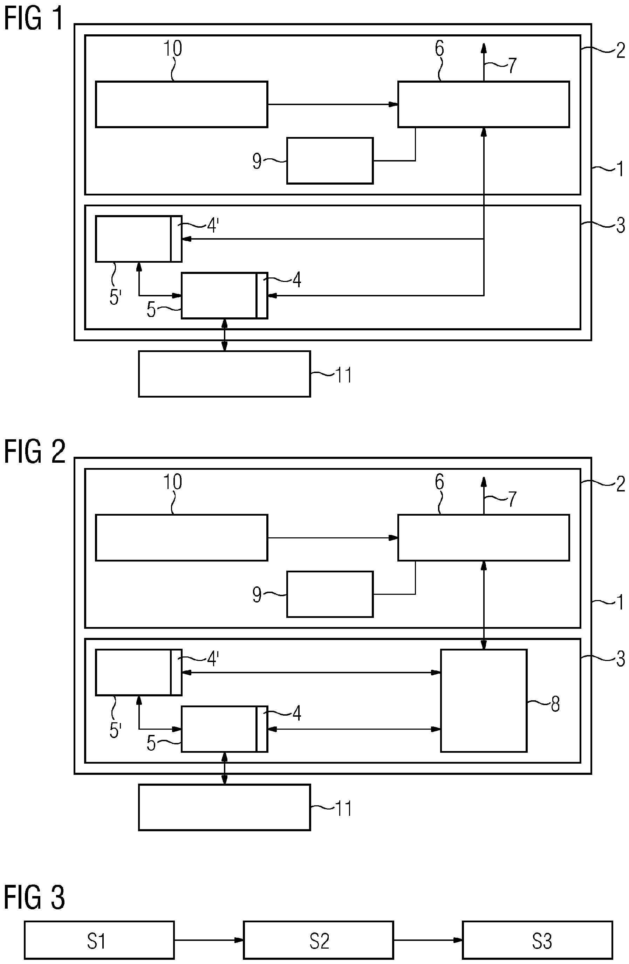

In FIG 1 ist ein Blockdiagramm einer Beispielhaften Ausführungsform eines elektronischen Schaltkreises 1 nach dem verbesserten Konzept dargestellt.

Der Schaltkreis 1 ist insbesondere als FPGA-SoC ausgeführt, enthält also eine feldprogrammierbare Logikgatter-Anordnung 2, also ein FPGA 2, sowie ein Prozessorsystem 3, insbesondere ein Hard-Prozessor-System, HPS. Auf dem Prozessorsystem 3 wird beispielsweise ein Betriebssystem, insbesondere Linux, ausgeführt.

Das Prozessorsystem 3 weist einen Funktionsblock 5 auf, beispielsweise einen Hard-Prozessor, der als Zentralprozessor dienen kann.

Darüber hinaus kann das Prozessorsystem 3 optional weitere Prozessoren oder sonstige Funktionsblöcke aufweisen, von denen beispielhaft ein Funktionsblock 5' dargestellt ist.

Der Prozessor 5 weist ein Register 4 auf, das beispielsweise als Speicherbereich für Daten dient, auf die der Prozessor 5 besonders schnell zugreifen kann.

Das Register 4 kann beispielsweise als GPR ausgebildet sein, das beispielsweise allgemeine Zwischenergebnisse von Berechnungen enthalten kann. Das Register 4 kann auch als SPR ausgebildet sein, das beispielsweise sicherheitsrelevante Informationen enthalten kann. Das SPR kann beispielsweise als Sicherheitsregister, Virtualisierungsregister, SpeicherschutzRegister oder Sicherer-Start-Register ausgestaltet sein und entsprechend eine Konfiguration eines Hypervisors, eine Konfiguration einer Speicherschutzeinheit, MPU oder eine Konfiguration zum sicheren Starten enthalten. Beispielsweise kann das Register 4 auch als Schattenregister ausgestaltet sein, das beispielsweise eine Laufzeitkopie von sicherheitsrelevanten Daten enthalten kann. Schattenregister können beispielsweise aus zur Performanzsteigerung eingesetzt werden, beispielsweise in einer Pipeline von Prozessoren oder als Zwischenspeicher für FPGA-eFuses.

Es können aber auch Funktionsblöcke Register aufweisen, die nicht als Prozessoren ausgestaltet sind, beispielsweise Funktionsblöcke, die als Peripherieblöcke, Schnittstellen, Co-Prozessoren oder CPU-Erweiterungen ausgestaltet sind.

Der Funktionsblock 5' kann beispielsweise als Co-Prozessor, insbesondere als Kryptographie-Co-Prozessor ausgebildet sein und ein weiteres Register 4' enthalten.

Das FPGA 2 weist ein Speicherelement 10 auf, beispielsweise ein SRAM, das insbesondere eine Konfigurationsdatei des FPGA, also einen Bitstream zur Konfiguration des FPGA, speichert.

Das FPGA 2 enthält zudem eine Überwachungseinheit 6. Die Überwachungseinheit 6 kann als in einer Hardware des FPGA 2 festverbaute Komponente, also nicht als Teil der konfigurierbaren Elemente des FPGA, implementiert sein oder als konfigurierbare FPGA-Hardwarekomponente instanziiert sein, insbesondere basierend auf der in dem Speicherelement 10 gespeicherten Konfigurationsdatei. Alternativ kann die Überwachungseinheit 6 auch als Software auf einem Soft-Prozessor des FPGA 2 implementiert sein.

Optional kann das FPGA 2 ein weiteres Speicherelement 9 aufweisen, wobei die Überwachungseinheit 6 insbesondere auf das weitere Speicherelement 9 zugreifen kann.

Das FPGA 2 und das Prozessorsystem 3 sind miteinander verbunden, um Daten austauschen zu können, insbesondere über einen Bus. Insbesondere ist die Überwachungseinheit 6 mit dem Register 4 und optional mit dem Register 4' verbunden.

Die Überwachungseinheit 6 kann beispielsweise einen Registerwert aus dem Register 4 auslesen und den Registerwert selbst oder einen von dem Registerwert abhängigen Kontrollwert mit einem Referenzprüfwert überprüfen, insbesondere vergleichen. Stimmt der Referenzprüfwert mit dem Kontrollwert beziehungsweise mit dem ausgelesenen Registerwert überein so deutet das auf die Integrität des Registerwerts hin. Weichen Kontrollwert beziehungsweise Registerwert und Referenzprüfwert voneinander ab, kann dies insbesondere als Hinweis auf eine Manipulation des Registers 4 interpretiert werden.

Abhängig von einem Ergebnis der Überprüfung beziehungsweise des Vergleichs erzeugt die Überwachungseinheit 6 ein Ausgabesignal 7. Abhängig von dem Ausgabesignal 7 kann das FPGA 2 beispielsweise den Zugriff auf das FPGA 2 sperren und/oder sensible Daten von dem FPGA 2 löschen. Alternativ oder zusätzlich kann auch basierend auf dem Ausgabesignal 7 ein Alarmsignal generiert und beispielsweise extern bereitgestellt werden. Die konkrete Festlegung der Maßnahme, die abhängig von dem Ausgabesignal 7 ausgeführt wird, hängt von der spezifischen Anwendung ab.

Dadurch können mögliche Änderungen in dem Register 4 des Prozessorsystems 3 von dem FPGA 2 erkannt werden. Insbesondere kann die Verarbeitung des Ausgabesignals 7 mit Vorteil auf dem FPGA 2 selbst erfolgen, und damit unabhängig von einem Zustand des Prozessorsystems 3.

In verschiedenen Ausführungsformen kann das Ausgabesignal 7 von dem FPGA 2 zum Prozessorsystem 3 zurückgeroutet und entsprechend von einzelnen Komponenten des Prozessorsystems 3 verarbeitet werden.

Die Überprüfung der Integrität des weiteren Registers 4' beziehungsweise eines weiteren Registerwerts des weiteren Registers 4' kann analog zur Prüfung des Registerwerts des Registers 4 erfolgen.

Der Registerwert des Registers 4 kann während der Betriebszeit des Schaltkreises 1 beispielsweise konstant bleiben. Dies kann beispielsweise der Fall sein, wenn der Registerwert einem kryptographischen Schlüssel oder einem Teil eines solchen Schlüssels entspricht.

In diesem Fall kann der Referenzprüfwert manipulationsgeschützt und fest gespeichert werden. Die Überwachungseinheit 6 prüft, ob der gespeicherte Referenzprüfwert und der zur Laufzeit ausgelesene Registerwert oder Kontrollwert übereinstimmen.

Vorzugsweise wird der Kontrollwert basierend auf dem Registerwert, beispielsweise mittels der Überwachungseinheit 6, unter Anwendung einer schlüssellosen oder schlüsselbehafteten kryptographischen Funktion, beispielsweise einer kryptographischen Hashfunktion, berechnet.

Der Referenzprüfwert kann beispielsweise in dem FPGA 2, insbesondere auf dem weiteren Speicherelement 9, gespeichert sein.

In alternativen Ausführungsformen wird der Referenzprüfwert an den zu prüfenden Registerwert im Register 4 angehängt. Der Referenzprüfwert kann dann beispielsweise mit einem schlüsselbasierten Hash-Verfahren berechnet werden oder der Referenzprüfwert ist eine digitale Signatur. Um die Überprüfung oder den Vergleich durchzuführen, kann die Überwachungseinheit 6 insbesondere bei einem schlüsselbasierten Hash-Verfahren auf einen geheimen Schlüssel beziehungsweise im Falle einer Signatur auf einen öffentlichen Schlüssel zurückgreifen. Der öffentliche Schlüssel ist dabei beispielsweise manipulationsgeschützt in dem FPGA 2 abgespeichert. Der geheime Schlüssel ist insbesondere manipulationsgeschützt und geheim auf dem FPGA 2 abgespeichert.

In einer Ausführungsform kann der Referenzprüfwert sowohl zur Überprüfung des Registerwerts des Registers 4 als auch zur Überprüfung des weiteren Registerwerts des Registers 4' herangezogen werden. Beispielsweise kann der Referenzprüfwert mittels einer kryptographischen Funktion aus dem Registerwert und dem weiteren Registerwert berechnet werden. Die Überwachungseinheit 6 kann dann den Kontrollwert ebenfalls basierend auf dem Registerwert und dem weiteren Registerwert berechnen und den Kontrollwert mit dem Referenzprüfwert wie beschrieben überprüfen oder vergleichen. In solchen Ausführungsformen kann Speicherplatz gespart werden.

In verschiedenen Ausführungsformen können zusätzlich zu dem Referenzprüfwert weitere Referenzprüfwerte als Redundanz abgespeichert werden. In solchen Ausführungsformen kann die Überwachungseinheit 6 zur Laufzeit neben dem Kontrollwert mehrere weitere Kontrollwerte basierend auf dem Registerwert berechnen, beispielsweise anhand weiterer kryptographischer Funktionen, und die Vielzahl der Kontrollwerte mit der Vielzahl der Referenzprüfwerte überprüfen oder vergleichen. In alternativen Ausführungsformen können die Referenzprüfwerte auch identisch sein und die Überwachungseinheit 6 überprüft oder vergleicht einen, wie beschrieben berechneten, Kontrollwert mit den an verschieden Speicherorten abgespeicherten Referenzprüfwerten. Dadurch kann eine höhere Sicherheit erzielt werden.

Der Registerwert des Registers 4 kann sich aber auch über die Laufzeit verändern, beispielsweise wenn das Register 4 Zwischenergebnisse einer kryptographischen Berechnung enthält.

In diesem Fall kann der Referenzprüfwert beispielsweise in dem weiteren Register 4' oder einem (nicht dargestellten), zusätzlichen Register des Prozessorsystems 3 gespeichert sein. Bei Änderungen des Registerwerts wird dann stets auch der Referenzprüfwert entsprechend geändert. Die Überwachungseinheit 6 überprüft beispielsweise wiederholt, ob der veränderliche Registerwert mit dem entsprechend angepassten Referenzprüfwert stets zusammenpasst.

In verschiedenen Ausführungsformen werden nicht alle einzelnen sicherheitskritischen variablen Register mit Prüfwerten versehen sondern es wird eine Registerbank definiert, in welcher einzelne sicherheitskritische Registerwerte dynamisch allokiert werden können. Damit kann Rechenaufwand und Speicherplatz eingespart werden. Außerdem kann dadurch gezielt ein einzelnes Register für eine bestimmte begrenzte Zeit überwacht werden, beispielsweise während einer kryptographischen oder sicherheitsrelevanten Operation. Die Steuerung der Registerbank kann beispielsweise durch das Prozessorsystem 3 oder durch das FPGA 2 erfolgen.

Der Referenzprüfwert kann, wie beschrieben, in dem FPGA 2 selbst oder auf einem externen Speicher, also einen extern zum elektronischen Schaltkreis 1 angeordneten Speicher, abgespeichert sein. Es ist vorteilhaft, den Referenzprüfwert in obfuskierter Form oder in verschlüsselter Form abzuspeichern, um mögliche Angriffsszenarien zu vermeiden. In einer Ausführungsform sind die Referenzprüfwerte zusammen mit der Überwachungseinheit 6 obfuskiert.

Die Kommunikation zwischen dem Register 4 und der Überwachungseinheit 6 kann in verschiedenen Ausführungsformen über eine dedizierte FPGA-zu-Register-Sicherheitsschnittstelle durchgeführt werden, die speziell für diese Überwachungsaufgabe implementiert ist. Alternativ kann die Kommunikation aber auch über generische Schnittstellen zwischen dem FPGA2 und dem Prozessorsystem 3 erfolgen, beispielsweise über einen fortgeschrittenen erweiterbaren Schnittstellenbus (englisch: "Advanced Extensible Interface Bus", AXI) oder eine FPGA-zu-DRAM-Schnittstelle, die beispielsweise eine direkte Verbindung von dem FPGA 2 zu einem DRAM-Arbeitsspeicher 11 des Prozessorsystems 3 ermöglicht.

Der DRAM-Arbeitsspeicher 11 ist in FIG 1 zwar außerhalb von dem Schaltkreis 1 dargestellt, kann sich aber vollständig oder teilweise auf dem SOC befinden, insbesondere auf dem Prozessorsystem 3.

In FIG 2 ist ein Blockdiagramm einer weiteren beispielhaften Ausführungsform eines elektronischen Schaltkreises 1 nach dem verbesserten Konzept gezeigt. Der elektronische Schaltkreis 1 der FIG 2 stimmt zu großen Teilen mit dem in FIG 1 gezeigten Schaltkreis 1 überein. Daher wird hier lediglich auf die Unterschiede Bezug genommen.

Während die Überwachungseinheit 6 gemäß FIG 1 das Register 4 und optional das weitere Register 4' direkt auslesen kann, ist in dem Prozessorsystem 3 gemäß FIG 2 eine Kontrollwertkomponente 8 vorgesehen, welche das Register 4 und optional das weitere Register 4' auslesen kann. Die Überwachungseinheit 6 steht in einer Kommunikationsverbindung mit der Kontrollwertkomponente 8.

In solchen Ausführungsformen kann das FPGA 2, insbesondere die Überwachungseinheit 6, das Prozessorsystem anhand eines Challenge-Response Protokolls authentifizieren. Die Überwachungseinheit 6 berechnet dazu zur Laufzeit beispielsweise eine Aufgabe und übermittelt diese an die Kontrollwertkomponente 8. Die Kontrollwertkomponente 8 berechnet basierend auf der Aufgabe und dem Registerwert beziehungsweise den Registerwerten eine Antwort, der beispielsweise dem Kontrollwert entspricht und übermittelt den Kontrollwert an die Überwachungseinheit 6.

Im Übrigen stimmen die Funktionalitäten der Ausführungsformen aus FIG 1 und FIG 2 überein.

In FIG 3 ist ein Ablaufdiagramm einer beispielhaften Ausführungsform eines Verfahrens zur Integritätsüberprüfung eines Registerinhalts nach dem verbesserten Konzept dargestellt.

Das Verfahren kann insbesondere mit einem elektronischen Schaltkreis 1, wie er in FIG 1 oder FIG 2 gezeigt und entsprechend beschrieben wurde durchgeführt werden.

Im Schritt S1 wird mittels des FPGA 2, insbesondere mittels der Überwachungseinheit 6, ein Kontrollwert bestimmt, der von dem in dem Register 4 des Prozessorsystems 3 gespeicherten Registerwert abhängt. Der Kontrollwert wird in Schritt S2 mittels der Überwachungseinheit 6 mit dem Referenzprüfwert überprüft. In Schritt S3 wird abhängig von einem Ergebnis der Überprüfung mittels der Überwachungseinheit 6 das Ausgabesignal 7 erzeugt.

Wie beschrieben wird mit dem verbesserten Konzept insbesondere eine Möglichkeit angegeben, Registerinhalte eines Prozessorsystems eines FPGA-SoC-Systems durch das FPGA des Schaltkreises zur Laufzeit auf mögliche Manipulationen zu überprüfen. Liegt eine Manipulation vor, so kann das FPGA dies entsprechend erkennen und abhängig davon reagieren.

Insbesondere können besonders sicherheitsrelevante Register überwacht werden, die beispielsweise besonders manipulationsanfällig sind. Die Überwachung und die Verarbeitung erfolgt mit Vorteil auf dem FPGA unabhängig von dem Prozessorsystem selbst.

Insbesondere kann die Integritätsprüfung nach dem verbesserten Konzept nicht nur beim Hochfahren des Systems sondern insbesondere auch zur Laufzeit erfolgen. Sowohl durch Manipulationsversuche oder durch zufällige oder absichtlich herbeigeführte Fehler entstandene Änderungen der Registerinhalte können nach dem verbesserten Konzept erkannt werden.

## Patentansprüche

1. Elektronischer Schaltkreis mit einer feldprogrammierbaren Logikgatter-Anordnung (2) und einem Prozessorsystem (3), das ein Register (4) enthält,
**dadurch gekennzeichnet, dass**
- die Logikgatter-Anordnung (2) eine Überwachungseinheit (6) aufweist, die mit dem Prozessorsystem (3) verbunden ist und dazu eingerichtet ist, einen Kontrollwert zu bestimmen, der von einem in dem Register (4) gespeicherten Registerwert abhängt;
- die Überwachungseinheit (6) dazu eingerichtet ist, den Kontrollwert mit einem Referenzprüfwert zu überprüfen; und
- die Überwachungseinheit (6) dazu eingerichtet ist, abhängig von einem Ergebnis der Überprüfung ein Ausgabesignal (7) zu erzeugen.

2. Elektronischer Schaltkreis nach Anspruch 1,
**dadurch gekennzeichnet, dass**
die Überwachungseinheit (6) dazu eingerichtet ist, den Registerwert auszulesen, um den Kontrollwert zu bestimmen.

3. Elektronischer Schaltkreis nach Anspruch 1,
**dadurch gekennzeichnet, dass**
- die Überwachungseinheit (6) dazu eingerichtet ist, eine Authentifizierungsinformation zu erzeugen und dem Prozessorsystem (3) bereitzustellen;
- das Prozessorsystem (3) eine Kontrollwertkomponente (8) enthält, die dazu eingerichtet ist, abhängig von der Authentifizierungsinformation und dem Registerwert eine Authentifizierungsantwort zu erzeugen und der Überwachungseinheit (6) bereitzustellen; und
- die Überwachungseinheit (6) dazu eingerichtet ist, basierend auf der Authentifizierungsantwort den Kontrollwert zu bestimmen.

4. Elektronischer Schaltkreis nach einem der Ansprüche 1 bis 3,
**dadurch gekennzeichnet, dass**
der Referenzprüfwert einem Sollwert für den Kontrollwert oder einem Sollwert für den Registerwert entspricht.

5. Elektronischer Schaltkreis nach einem der Ansprüche 1 bis 3,
**dadurch gekennzeichnet, dass**
die Überwachungseinheit (6) dazu eingerichtet ist, den Referenzprüfwert anhand einer kryptographischen Funktion basierend auf einem Sollwert für den Kontrollwert oder basierend auf einem Sollwert für den Registerwert zu berechnen.

6. Elektronischer Schaltkreis nach einem der Ansprüche 1 bis 5,
**dadurch gekennzeichnet, dass**
der Referenzprüfwert in einem Speicherelement (9) der Logikgatter-Anordnung (2) oder in einem externen Speicherelement gespeichert ist.

7. Elektronischer Schaltkreis nach einem der Ansprüche 1 bis 5,
**dadurch gekennzeichnet, dass**
der Referenzprüfwert in dem Register (4) gespeichert.

8. Elektronischer Schaltkreis nach einem der Ansprüche 1 bis 7,
**dadurch gekennzeichnet, dass**
- das Prozessorsystem (2) einen Funktionsblock (5) aufweist, der das Register (4) enthält;
- der Funktionsblock (5) als Prozessor, als Speicherelement des Prozessorsystems, als Peripherieblock, als Co-Prozessor, als Schnittstelle oder als Speicherschutzblock ausgestaltet ist.

9. Elektronischer Schaltkreis nach einem der Ansprüche 1 bis 8,
**dadurch gekennzeichnet, dass**
die Überwachungseinheit (6) als festverbaute Komponente der Logikgatter-Anordnung (2) ausgestaltet ist.

10. Elektronischer Schaltkreis nach einem der Ansprüche 1 bis 8,
**dadurch gekennzeichnet, dass**
die Überwachungseinheit (6) als konfigurierbare Komponente der Logikgatter-Anordnung (2) ausgestaltet ist.

11. Elektronischer Schaltkreis nach einem der Ansprüche 1 bis 8,
**dadurch gekennzeichnet, dass**
die Überwachungseinheit (2) als Softwaremodul implementiert ist.

12. Elektronischer Schaltkreis nach einem der Ansprüche 1 bis 11,
**dadurch gekennzeichnet, dass**
- das Prozessorsystem (3) ein weiteres Register (4') enthält; und
- der Kontrollwert von einem in dem weiteren Register (4') gespeicherten weiteren Registerwert abhängt.

13. Elektronischer Schaltkreis nach Anspruch 12 und nach Anspruch 5,
**dadurch gekennzeichnet, dass**
die Überwachungseinheit (6) dazu eingerichtet ist, den Referenzprüfwert anhand der kryptographischen Funktion basierend auf dem Sollwert für den Registerwert und basierend auf einem Sollwert für den weiteren Registerwert zu berechnen.

14. Verfahren zur Integritätsüberprüfung eines Registerinhalts eines elektronischen Schaltkreises (1) mit einer feldprogrammierbaren Logikgatter-Anordnung (2) und einem Prozessorsystem (3),
**dadurch gekennzeichnet, dass**
- mittels der Logikgatter-Anordnung (2) ein Kontrollwert bestimmt wird, der von einem in einem Register (4) des Prozessorsystems (3) gespeicherten Registerwert abhängt;
- der Kontrollwert mittels der Logikgatter-Anordnung (2) mit einem Referenzprüfwert überprüft wird; und
- abhängig von einem Ergebnis der Überprüfung mittels der Logikgatter-Anordnung (2) ein Ausgabesignal (7) erzeugt wird.

15. Datenverarbeitungsprogrammprodukt mit Befehlen, welche bei Ausführung der Befehle durch einen elektronischen Schaltkreis (1) nach einem der Ansprüche 1 bis 13 den elektronischen Schaltkreis dazu veranlassen, ein Verfahren nach Anspruch 14 durchzuführen.
